Europäisches Patentamt

European Patent Office

Office européen des brevets

(11) Veröffentlichungsnummer: **0 337 104 B1**

(12) **EUROPÄISCHE PATENTSCHRIFT**

(45) Veröffentlichungstag der Patentschrift: **15.06.94**

(21) Anmeldenummer: **89103930.7**

(22) Anmeldetag: **06.03.89**

(51) Int. Cl.⁵: **G09G 1/14**, H04N 5/45

(54) **Schaltungsanordnung zum Steuern der bildlichen rasterartigen Darstellung von Informationen.**

(30) Priorität: **15.03.88 DE 3808668**

(43) Veröffentlichungstag der Anmeldung:
**18.10.89 Patentblatt 89/42**

(45) Bekanntmachung des Hinweises auf die
Patenterteilung:
**15.06.94 Patentblatt 94/24**

(84) Benannte Vertragsstaaten:
**DE FR GB IT NL SE**

(56) Entgegenhaltungen:
**EP-A- 0 111 362    WO-A-89/00369
GB-A- 2 085 257    GB-A- 2 100 097
GB-A- 2 140 243    GB-A- 2 180 128**

(73) Patentinhaber: **Siemens Nixdorf Informationssysteme Aktiengesellschaft
Fürstenallee 7
D-33102 Paderborn(DE)**

(72) Erfinder: **Grote, Josef
Wallstrasse 33
D-4787 Geseke 2(DE)**
Erfinder: **Hieronymus, Peter
Paul-Keller-Weg 17
D-4815 Schloss Holte(DE)**

(74) Vertreter: **Fuchs, Franz-Josef, Dr.-Ing. et al
Postfach 22 13 17
D-80503 München (DE)**

EP 0 337 104 B1

## Beschreibung

Die Erfindung betrifft eine Schaltungsanordnung nach dem Oberbegriff des Patentanspruchs 1.

Datensichtgeräte haben eine Bildschirmfläche, deren Seitenverhältnis im allgemeinen 4:3 beträgt. Da die Bildelementauflösung diesem Seitenverhältnis entspricht, hat jede auf dem Bildschirm dargestellte Bildelementinformation in x- und in y-Richtung übereinstimmende Seitenlänge bzw. Ausdehnung. Somit ist in dem zugehörigen Bildinformationsspeicher ein abbildungsgetreues Muster der Bildinformationselemente gespeichert. Durch die damit quadratische Form der Bildelemente ist es möglich, elektronisch in dem Bildinformationsspeicher den Speicherinhalt derart zu manipulieren, daß auf dem Bildschirm z.B. Drehbewegungen von Figuren verzerrungsfrei dargestellt werden können.

Informationen können bildlich aber auch mit Bildelementen dargestellt werden, die von der vorstehend beschriebenen Norm der Datensichtgeräte abweichen. Ein Beispiel dafür ist das Bildschirmtextverfahren. Bei diesem Verfahren werden Bildelemente verwendet, die das Seitenverhältnis 3:2 haben, also rechteckförmig sind. Die Bildinformationselemente haben bei der Darstellung auf der Fläche dieser Bildelemente dann nicht die Form eines kreisrunden Punktes, sondern einer Ellipse. Wird nach dem Bildschirmtextverfahren eine quadratische Fläche dargestellt, so besteht diese nicht aus gleich vielen Bildinformationselementen in x- und y-Richtung, sondern bei z.B. 30 Bildinformationselementen in x-Richtung beträgt deren Zahl in y-Richtung 20.

Wird ein solches Bildschirmtext-Bild auf dem Bildschirm eines normalen Datensichtgeräts dargestellt, so tritt eine Bildverzerrung ein, die dazu führt, daß ein Quadrat als Rechteck mit einem Seitenverhältnis dargestellt wird, das den kreisrunden Bildpunkten bzw. den durch die andere Rasterung quadratischen Darstellungsflächen der Bildelemente entspricht. Diese Verzerrung wirkt sich bei der Darstellung alphanumerischer Zeichen kaum auf deren Lesbarkeit aus, jedoch ist bei der Darstellung geometrischer Figuren eine Verfälschung des Informationsinhaltes gegeben, denn alle Informationen werden in y-Richtung stärker als in x-Richtung zusammengedrückt erscheinen.

Aus der GB-A-2 085 257 ist eine Schaltungsanordnung und ein Verfahren zum Ändern des Bildformates eines zeilenweise arbeitenden Bildschirmgeräts bekannt. Das Auslesen von Bildpunktdaten aus dem Bildinformationsspeicher wird mittels einer phasenstarren Regelschleife gesteuert. Aufgrund der Phasenstarrheit kann es beim Umschalten vorübergehend zu Bildstörungen auf dem Bildschirm kommen, bis die Regelschleife eingerastet ist. Zum Ändern des Bildformats wird bei der bekannten Schaltungsanordnung eine Zeilenverdoppelung durchgeführt, wozu zwischen einem Zeilenzähler und dem Bildinformationsspeicher ein Selektor geschaltet wird. Dieser Selektor halbiert die Adresse der Bildpunkte durch Bitverschiebung über Multiplexer oder Festwertspeicher.

Es ist Aufgabe der Erfindung, auf einem Datensichtgerät die Darstellung von Informationen mit Bildelementen unterschiedlicher Seitenverhältnisse zu ermöglichen, so daß keine Informationsverfälschung stattfindet.

Diese Aufgabe wird durch die Merkmale des Patentanspruchs 1 gelöst.

Durch die Erfindung wird erreicht, daß Informationen, deren Darstellung für Bildelemente mit dem abweichenden Seitenverhältnis vorgesehen ist, auch auf einem Datensichtge rät dargestellt werden können, dessen Bildelemente das übliche Seitenverhältnis 1:1 haben. Die Informationen werden dabei zwar nicht flächengetreu wiedergegeben, jedoch geometrisch ähnlich, d.h. ein Quadrat wird als Quadrat und ein Kreis als Kreis wiedergegeben. Es tritt zwar eine Größenveränderung derartiger Figuren ein, jedoch fällt diese kaum ins Gewicht und wird nur bei Vergleich mit einem gleich großen Bildschirm der anderen Darstellungsart erkennbar.

Die Erfindung kann auf praktische alle Fälle abweichender Seitenverhältnisse angewendet werden und ist mit geringem zusätzlichem Aufwand an Schaltmitteln realisierbar. Eine Änderung der Auslesegeschwindigkeit des Bildinformationsspeichers kann nur für die x-Richtung oder nur für die y-Richtung oder für beide Richtungen vorgesehen sein, was davon abhängt, für welche Richtung die Entzerrung durchzuführen ist. Die Änderung der Auslesegeschwindigkeit kann in einer Verringerung oder Erhöhung bestehen, jedoch wird in den meisten Fällen die Verringerung zweckmäßig sein, weil dem Auflösungsvermögen der Datensichtgeräte Grenzen gesetzt sind, die eine beliebige Verkleinerung der Bildpunkte verhindern. Wird die Auslesegeschwindigkeit verringert, so kann dies für die y-Richtung sehr einfach dadurch geschehen, daß jede Zeile von Bildelementinformationen aus dem Bildinformationsspeicher mehrfach nacheinander ausgelesen wird. Die Bildelemente und damit auch die Bildpunkte werden dadurch in y-Richtung jeweils um eine oder mehrere Zeilendicken verlängert.

Die folgende Beschreibung erläutert vorteilhafte Weiterbildungen der Erfindung, die in den Unteransprüchen angegeben sind und für beliebige Abweichungen der Seitenverhältnisse zweier unterschiedlicher Darstellungsarten anwendbar sind. Hierbei wird auf die Zeichnung Bezug genommen. Darin zeigen:

Fig. 1a und 1b

zwei Bildelemente mit unterschiedlichen Seitenverhältnissen,

Fig. 2
eine Darstellung von Informationen mit Bildelementen unterschiedlicher Seitenverhältnisse auf eine und demselben Bildschirm,

Fig. 3a und 3b
weitere Bildelemente mit unterschiedlichen Seitenverhältnissen,

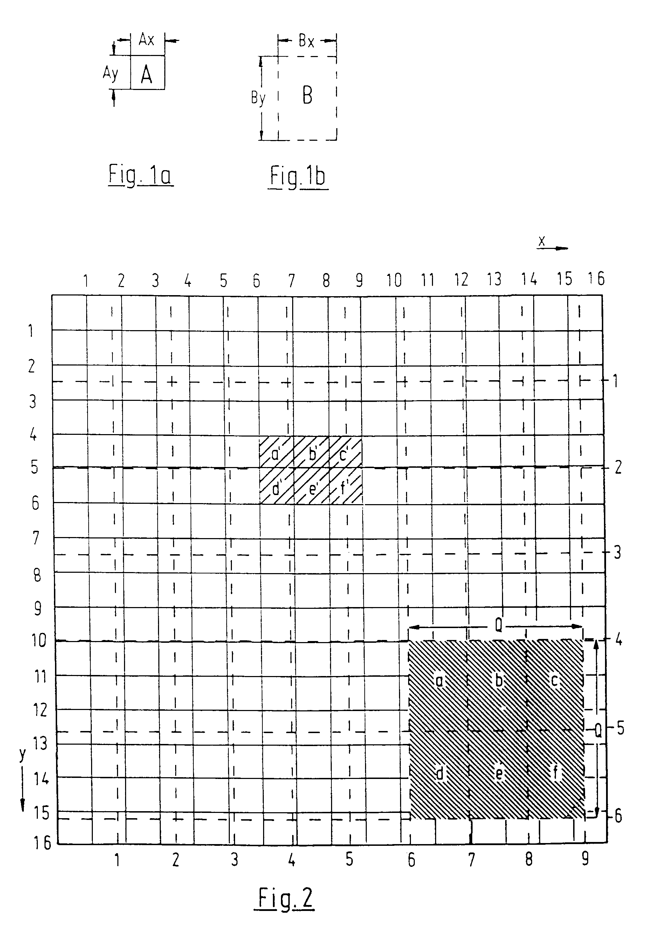

Fig. 4
eine Darstellung ähnlich Fig. 2, jedoch für die Anwendung der Erfindung,

Fig. 5
eine Ausführungsbeispiel einer Schaltungsanordnung nach der Erfindung,

Fig. 6a und 6b
schematische Darstellungen des Adressierprinzips eines Bildinformationsspeichers bei Anwendung der Erfindung auf Bildschirmtext-Darstellung mit einem Datensichtgerät,

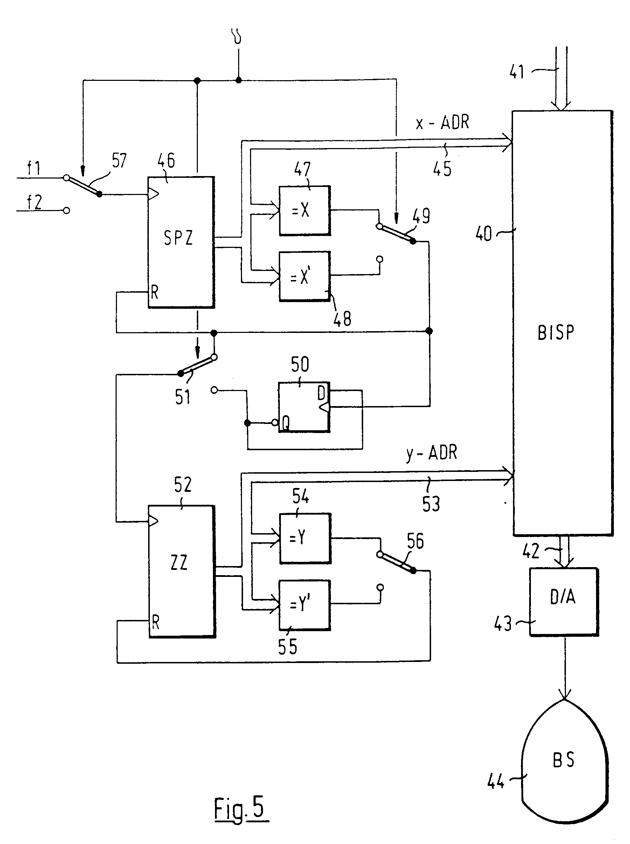

Fig. 7
den Adressiervorgang in einer Schaltungsanordnung nach Fig. 5 für den Fall einer Bild im Bild-Darstellung,

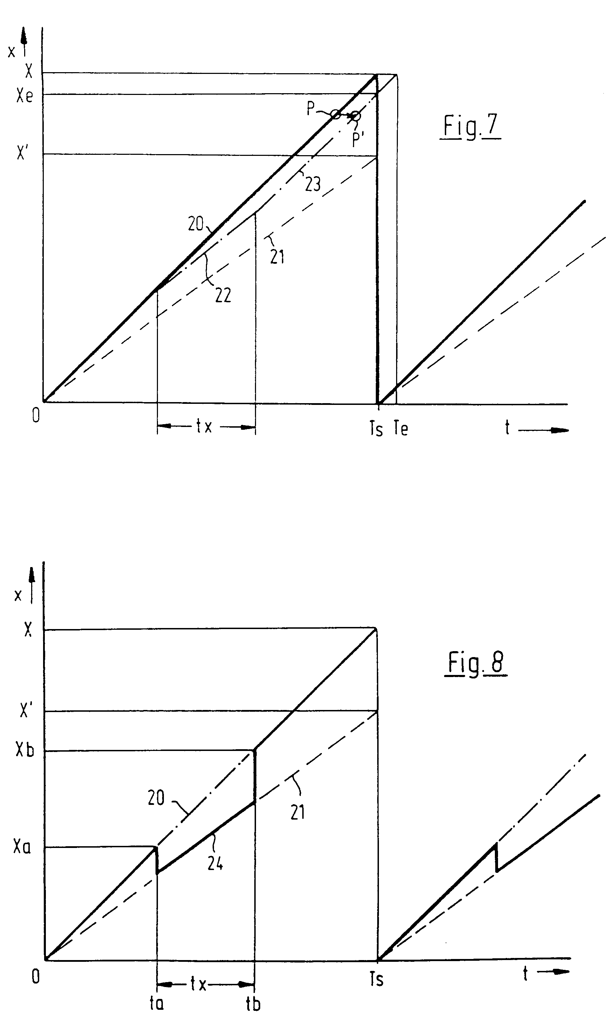

Fig. 8
einen Adressiervorgang ähnlich Fig. 7, jedoch bei Anwendung einer Weiterbildung der Erfindung,

Fig. 9a und 9b
jeweils eine schematische Bild im Bild-Darstellung bei Anwendung der Erfindung,

Fig. 10
eine weiteres Ausführungsbeispiel einer Schaltungsanordnung nach der Erfindung und

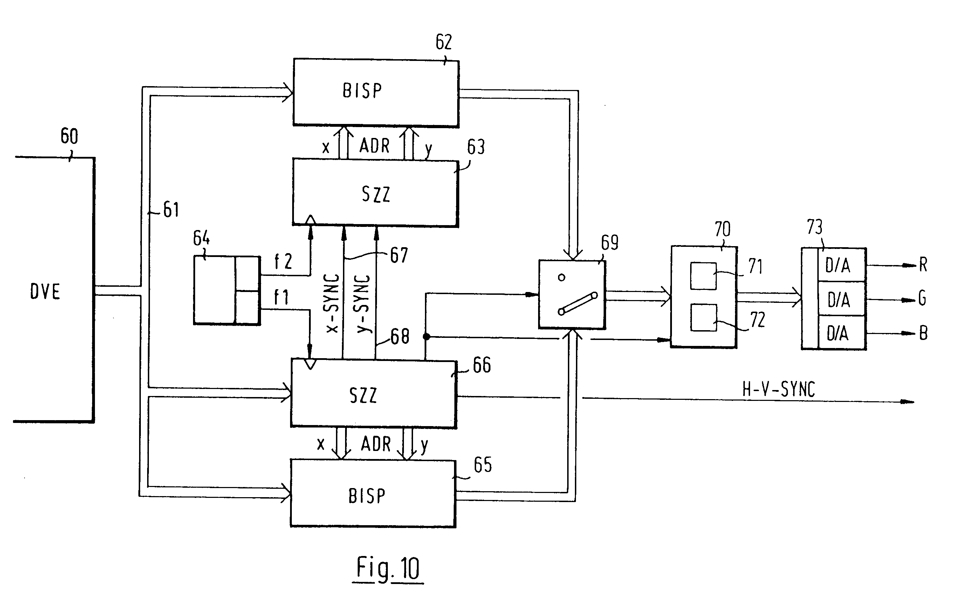

Fig. 11
eine deutlichere Darstellung zweier in der Schaltungsanordnung nach Fig. 10 verwendeter Adressierschaltungen.

In Fig. 1a ist schematisch ein Bildelement A dargestellt, wie es üblicherweise zur Informationsdarstellung auf Datensichtgeräten verwendet wird. Dieses Bildelement A hat eine Breite Ax und eine Höhe Ay. Diese beiden Abmessungen stimmen überein, so daß das Bildelement A quadratisch ist und Breite und Höhe das Verhältnis 1:1 bilden. Auf der quadratischen Darstellungsfläche des Bildelements A kann ein Informationselement in Form eines z.B. runden Bildpunktes dargestellt werden.

In Fig. 1b ist ein Bildelement B gestrichelt dargestellt, das eine Breite Bx und eine Höhe By hat. Wenn Breite und Höhe das Verhältnis 2:3 bilden, so handelt es sich um eine Bildelement B, das für die Informationsdarstellung auf einem Bildschirmtext-Sichtgerät verwendet wird. Dabei kann auf der Darstellungsfläche des Bildelements B ein z.B. ellipsenförmiger Bildpunkt dargestellt werden.

Die vorstehend erläuterten Bildelemente A und B eines Datensichtgeräts und eines Bildschirmtext-Sichtgeräts stimmen weder in ihren Abmessungen noch in ihren Abmessungsverhältnissen überein.

Fig. 2 zeigt einen vergrößerten Ausschnitt des Bildschirms eines Datensichtgeräts. Dieser Ausschnitt enthält in x-Richtung 16 Spalten und in y-Richtung 16 Zeilen quadratischer Bildelemente, die die Größe des in Fig. 1a gezeigten Bildelements A haben und mit durchgezogenen Linien dargestellt sind. Dieser Bildschirmausschnitt könnte auch 9 Spalten und 6 Zeilen solcher Bildelemente aufnehmen, die dem in Fig. 1b dargestellten Bildelement B entsprechen. Diese Anordnung von Bildelementen ist in Fig. 2 durch gestrichelte Linien dargestellt, die entsprechend numeriert sind.

In Fig. 2 ist im rechten unteren Teil des Bildschirmausschnittes ein Quadrat mit der Seitenlänge Q dargestellt, das aus 6 rechteckförmigen Bildelementen a bis f zusammengesetzt ist, die jeweils dem Bildelement B nach Fig. 1b entsprechen. Dieses Quadrat würde auf einem Bildschirmtext-Sichtgerät als Darstellung von 6 Bildschirmtext-Bildpunkten erscheinen, also 6 Informationselemente wiedergeben. Würden diese Informationselemente auf einem Datensichtgerät wiedergegeben, so würden sie ein Rechteck belegen, das auf dem Bildschirmausschnitt in Fig. 2 aus quadratischen Bildelementen a′ bis f′ zusammengesetzt ist. Aus der unterschiedlichen Form der beiden auf dem Bildschirmausschnitt mit 6 Informationselementen belegten Teilflächen ist zu erkennen, daß bei der Darstellung von Bildschirmtext-Informationen auf Datensichtgeräten ein Bildschirmtext-Objekt in x- und y-Richtung unterschiedlich verkleinert, also verzerrt wird. So können bei der Darstellung von Bildschirmtext-Informationen auf Datensichtgeräten beispielsweise aus Quadraten Rechtecke und aus Kreisen Ellipsen werden und Buchstaben in ihrer Höhe zusammengedrückt erscheinen. Bei alphanumerischen Texten führt eine solche Verzerrung im allgemeinen nicht zu einer Beeinträchtigung der Lesbarkeit. Bei geometrischen Figuren ist aber eine Veränderung der Informationen unvermeidbar.

Wenn diese Verzerrungen vermieden werden sollen, also eine flächengetreue Darstellung der Bildinformationen des Bildschirmtextes auf einem Datensichtgerät vorzunehmen ist, so muß, wie aus Fig. 2 erkennbar wird, eine Verlängerung der Bildelemente A des Datensichtgeräts in x-Richtung und in y-Richtung vorgesehen werden, die den Unterschieden der Abmessungen der Bildelemente A und B (Fig. 1) entspricht. Außerdem kann Fig. 2 entnommen werden, daß ein Objekt des Bildschirmtextes, dessen linke obere Ecke die x,y-Adresse 6,4 hat, auf einem Datensichtgerät nach links oben verschoben erscheinen würde, wenn es mit derselben Adresse, aber mit Bildelementen eines Datensichtgeräts abgebildet würde.

Wollte man bei einem Datensichtgerät die Höhe der Bildelemente in y-Richtung ändern, so müßten umfangreiche Änderungen vorgenommen werden, die zu einer von der Norm abweichenden Zeilenzahl führen würden. Ein Angleichen der Darstellung auf einem Datensichtgerät an diejenige eines Bildschirmtext-Sichtgeräts derart, daß Bildschirmtext-Informationen auf einem Datensichtgerät flächengetreu wiedergegeben werden, ist also nicht ohne weiteres möglich.

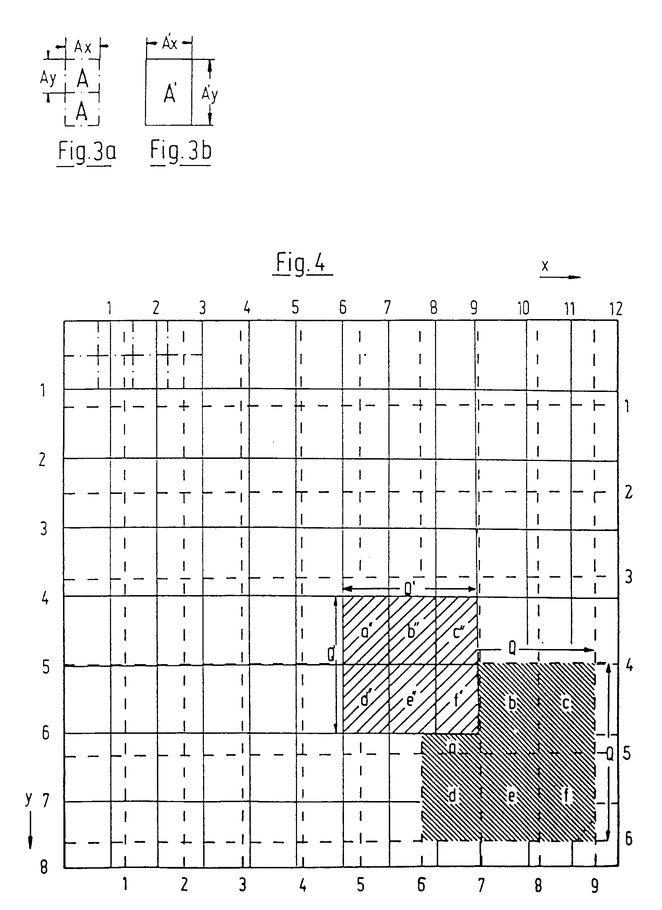

Fig. 3 zeigt eine Art der Veränderung des Bildelements A eines Datensichtgeräts, durch die es möglich ist, Bildschirmtext-Informationen auf einem Datensichtgerät nicht flächengetreu, sondern flächenähnlich darzustellen, d.h. mit in x- und y-Richtung gleichartiger Verzerrung, so daß sich lediglich der Maßstab, nicht aber die Form wiederzugebender Informationen ändert. Fig. 3a zeigt ein Bildelement, das aus zwei Bildelementen A der in Fig. 1a gezeigten Art zusammengesetzt ist, so daß Breite und Höhe das Verhältnis 1:2 bilden. Fig. 3b zeigt ein Bildelement A′, das durch eine Verbreiterung des Bildelements nach Fig. 3a entstanden ist und die Breite A′x und die Höhe A′y hat. Die Erfindung sieht die Abbildung von Bildschirmtext-Informationen mit Bildelementen dieser Art vor. Da die Höhe A′y den doppelten Wert der Höhe Ay des Bildelements nach Fig.1a hat, kann ein Bildelement A′ auf einem Datensichtgerät dadurch erzeugt werden, daß der betreffende Bildpunkt zweimal übereinander dargestellt wird. Die Bildpunkte einer Bildzeile sind demgemäß zweimal untereinander wiederzugeben. Wenn jeder Bildpunkt dann noch in x-Richtung verbreitert wird, so wird mit der Information eines jeden Bildpunktes ein Bildelement ausgefüllt, das dem Bildelement A′ nach Fig. 3b entspricht.

Das Ergebnis einer solchen Darstellung zeigt Fig. 4. Es ist wiederum ein Bildausschnitt eines Datensichtgeräts gezeigt, der die Größe des in Fig. 2 gezeigten Bildausschnittes hat und das Quadrat mit der Seitenlänge Q enthält, welches aus den Bildelementen a bis f besteht. Die linke obere Ecke dieses Quadrats hat die x,y-Adresse 6,4 in dem gestrichelt dargestellten Raster von Bildelementen, die dem Bildelement B nach Fig. 1b entsprechen. Fig. 4 zeigt ein weiteres Quadrat mit der Seitenlänge Q′, dessen linke obere Ecke in dem durchgezogen dargestellten Raster gleichfalls die x,y-Adresse 6,4 hat und aus Bildelementen a″ bis f″ besteht, die jeweils dem in Fig. 3b gezeigten Bildelement A′ entsprechen. Die Quadratform der mit diesen Bildelementen a″ bis f″ wiedergegebenen Figur ergibt sich dan, wenn Breite und Höhe des Bildelements A′ nach Fig. 3b das Verhältnis 2:3 bilden, da dieses auch für das Bildelement B nach Fig. 1b vorausgesetzt wird. Es ist leicht zu erkennen, daß dieses Verhältnis vorliegt, wenn A′x = 4/3 Ax für A′y =

2Ay ist. Allgemein gilt für die Verlängerung eines quadratischen Bildelements A in x-Richtung bei Verdoppelung der Höhe in y-Richtung zwecks Bildung eines Bildelements, das einem rechteckförmigen Bildelement B mit der Breite Bx und der Höhe By ähnlich ist,

$$v = 2 \cdot \frac{Bx}{By} .$$

Fig. 4 zeigt, daß bei Anwendung dieses Prinzips ein Bildschirmtext-Objekt auf einem Datensichtgerät geometrisch ähnlich wiedergegeben wird, wobei die Verschiebung nach links oben wesentlich geringer als nach Fig. 2 ist und eine Verkleinerung erfolgt, die nur bei übereinstimmender Bildschirmgröße erkennbar wird, jedoch auch dann tragbar ist.

In Fig. 5 ist eine Schaltungsanordnung dargestellt, mit der es möglich ist, auf einem Datensichtgerät wahlweise normale Dateninformationen oder Bildschirmtext-Informationen darzustellen. Diese Schaltungsanordnung enthält einen Bildinformationsspeicher 40, in den über einen Adreß-Datenbus 41 Bildinformationen z.B. aus dem Arbeitsspeicher einer nicht gezeigten Datenverarbeitungseinrichtung eingeschrieben werden. Diese Bildinformationen, die z.B. die Intensität und die Farbe von Bildelementen angeben können, werden über einen Datenbus 42 aus dem Bildinformationsspeicher 40 zu einem Umsetzer 43 geleitet, der sie in analoge rot-grünblau-Signale zur Ansteuerung eines Bildschirms 44 umsetzt. Die zur bildlichen Darstellung solcher Informationen erforderlichen Vertikal- und Horizontalsynchronisationsschaltungen sind in Fig. 5 nicht gezeigt. Es sei aber vorausgesetzt, daß die Bildwiederholfrequenz und damit die Vertikal- und Horizontalsynchronisationsfrequenz unabhängig von den darzustellenden Informationen konstant sind.

Zur Adressierung des Bildinformationsspeichers 40 dienen ein Spaltenzähler 46 und ein Zeilenzähler 52. Der Spaltenzähler 46 adressiert den Bildinformationsspeicher 40 also in x-Richtung, und die entsprechenden Adressensignale werden ihm über einen Adreßbus 45 zugeführt. Sie werden über diesen Adreßbus 45 ferner zwei Vergleichern 47 und 48 zugeführt, die die jeweils aktuelle Adresse mit vorgegebenen Werten X bzw. X′ vergleichen. Die beiden Vergleicher 47 und 48 geben jeweils ein Ausgangssignal ab, wenn die aktuelle Adresse mit dem Wert X bzw. X′ übereinstimmt. Dieses Ausgangssignal wird über einen Umschalter 49 dem Rücksetzeingang R des Spaltenzählers 46, dem einen Kontakt eines Umschalters 51 und dem Takteingang eines D-Flipflops 50 zugeführt. Durch die Verbindung des Ausgangssignals der Vergleicher 47 und 48 mit dem Rücksetzeingang R des Spaltenzählers 46 wird die maximal mögliche Zahl Bildelemente pro Zeile bestimmt, in denen auf dem Bildschirm 44 Bildinformationen dargestellt werden können. Nach Erreichen dieses Maximalwertes beginnt der Spaltenzähler 46 seinen Zählvorgang ausgehend vom Zählwert Null. Dieser Zählvorgang wird mit einer Frequenz f1 gesteuert, die dem Takteingang des Spaltenzählers 46 über einen Umschalter 57 zugeführt wird. Der Umschalter 57 wird wie die Umschalter 49 und 51 durch ein Steuersignal U gesteuert, das ihnen von der nicht gezeigten Datenverarbeitungseinrichtung zugeführt wird.

Das D-Flipflop 50 ist als Faktor 2-Teiler geschaltet, da sein Dateneingang mit seinem invertierenden Ausgang Q verbunden ist. Die ihm am Takteingang zugeführten Signale erscheinen also am anderen Kontakt des Umschalters 51 mit halber Frequenz. Der Umschalter 51 ist mit dem Takteingang des Zeilenzählers 52 verbunden, so daß dieser bei entsprechender Position des Umschalters 51 mit den Ausgangssignalen des D-Flipflops 50 getaktet wird. Dies bedeutet, daß er seinen Zählstand bei jedem oder bei jedem zweiten Rücksetzen des Spaltenzählers 46 um den Wert 1 erhöht, was von der Position des Umschalters 51 abhängt. Der Ausgang des Zeilenzählers 52 ist wie der Ausgang des Spaltenzählers 46 über einen Adreßbus 53 mit dem Bildinformationsspeicher 40 und zwei Vergleichern 54 und 55 verbunden. Dadurch wird der Bildinformationsspeicher 40 in y-Richtung adressiert, wobei der Zeilenzähler 52 jeweils dann rückgesetzt wird, wenn der Vergleicher 54 das Erreichen der Zeilenzahl Y bzw. der Vergleicher 55 das Erreichen der Zeilenzahl Y' signalisiert und dieses Signal über einen Umschalter 56 an den Rücksetzeingang des Zeilenzählers 52 abgibt. Der Umschalter 56 wird gleichfalls durch das Steuersignal U aus der nicht gezeigten Datenverarbeitungseinrichtung gesteuert.

In der in Fig. 5 gezeigten Position der Umschalter 49, 51 56 und 57 wird der Inhalt des Bildinformationsspeichers 40 auf dem Bildschirm 44 in Bildelementen abgebildet, deren Raster demjenigen eines normalen Datensichtgeräts entspricht. Dabei wird die Auslesegeschwindigkeit in x-Richtung durch die Frequenz f1 bestimmt und mit jedem Rücksetzen des Spaltenzählers 46 zur nächsten Zeile weitergeschaltet. Die letzte Spalte bzw. Zeile ist durch die Vergleicher 47 und 54 bestimmt, die den Zählstand X bzw. Y signalisieren.

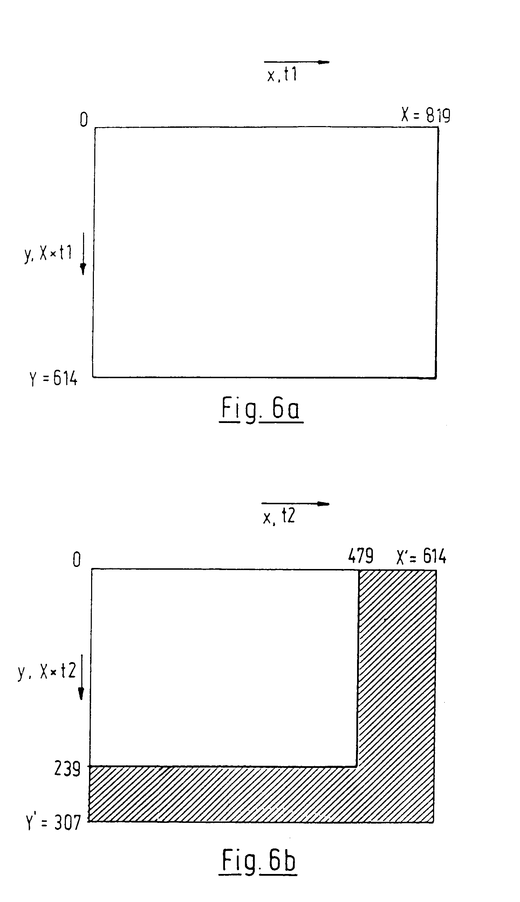

Wenn der Bildinformationsspeicher 40 Bildinformationen enthält, die in Bildelementen darzustellen sind, welche von der Größe der Bildelemente eines normalen Datensichtgeräts abweichen, so müssen die Umschalter 49, 51, 56 und 57 in ihre zweite Position gebracht werden, wozu das Steuersignal U dient. In dieser Stellung wird die Auslesegeschwindigkeit durch die Frequenz f2 bestimmt, die mit der Frequenz f1 das Verhältnis 3:4 bildet. Sie führt also zu einem langsameren Auslesen der Bildinformationen und damit zu deren Verlängerung in x-Richtung mit dem Faktor 4/3 gegenüber der vorherigen Darstellung. Die Auslesegeschwindigkeit in y-Richtung wird durch das D-Flipflop 50 um den Faktor 2 reduziert. Da gemäß Voraussetzung die Horizontal- und die Vertikalsynchronisation des Bildschirms 44 konstant sein sollen, werden durch die Umschaltung die Bildinformationen einer Zeile in der nächstfolgenden Zeile erneut wiedergegeben. Die beiden Vergleicher 48 und 55 bestimmen dabei das Rücksetzen des Spaltenzähler 46 und des Zeilenzählers 52 jeweils bei Erreichen des Zählstandes X' und Y'. Wie groß diese Werte sein müssen, wird im folgenden an Hand der Fig. 6 erläutert.

In Fig. 6a sind die Zählvolumina des Spaltenzählers 46 (Fig.5) und des Zeilenzählers 52 (Fig. 5) als Diagramm dargestellt für den Fall der Informationsdarstellung auf dem Bildschirm 44 mit quadratischen Bildelementen, deren Anzahl pro Zeile 820 ist und wobei die Zeilenzahl 615 beträgt. Einschließlich des Zählstandes Null wird der Spaltenzähler 46 also bei Erreichen des Zählstandes X = 819 und der Zeilenzähler 52 bei Erreichen des Zählstandes Y = 614 rückgesetzt. Das in Fig. 6a gezeigte Diagramm gibt also nicht nur die Zählvolumina in x- und y-Richtung wieder, sondern auch Vielfache der Taktzeit $t1 = 1/f1$ in x-Richtung und Vielfache der Taktzeit $X \cdot t1$ des Zeilenzählers 52 in y-Richtung. Außerdem ist es möglich, das in Fig. 6a gezeigte Diagramm als flächenhafte Wiedergabe des Bildschirms 44 zu interpretieren.

Wenn auf dem Bildschirm nicht quadratische, sondern rechteckförmige Bildelemente zur Informationsdarstellung verwendet werden sollen und diese dem in Fig. 3b dargestellten Bildelement A' entsprechen und wenn ferner diese Informationsdarstellung aus Bildschirmtext-Informationen besteht, so ergibt sich das in Fig. 6b gezeigte Diagramm, das für den Spaltenzähler 46 das Zählvolumen 615 und für den Zeilenzähler 52 das Zählvolumen 308 wiedergibt. Dies entspricht in x-Richtung einer Taktzeit $t2 = 1/f2$ und in y-Richtung einer Taktzeit $X' \cdot t2$. Einschließlich des Zählwerts Null erreichen der Spaltenzähler 46 und der Zeilenzähler 52 dann lediglich den Zählwert X' = 614 und Y' = 307. Die Zählvolumina 615 und 308 ergeben sich dadurch, daß die Bildelemente des Bildschirms 44 gemäß Voraussetzung um den Faktor 4/3 in x-Richtung verbreitert sind und in y-Richtung die doppelte Höhe annehmen sollen. Dann kann der Bildschirm 44 in x-Richtung lediglich 615 und in y-Richtung 308 Bildelemente aufnehmen. Da aber die Bildschirmtext-Informationsdarstellung gemäß Norm mit 480 Bildpunkten in x-Richtung und 240 Zeilen in y-Richtung erfolgt, kann der Bildschirm 44 des Datensichtgeräts zur Darstellung eines Bildschirmtext-Bildes nicht vollständig genutzt werden. Die ungenutzte Fläche ist in Fig. 6b schraffiert dargestellt. Da gleichbleibende Zeilensynchronsteuerung auch bei der Wiedergabe von Bildschirmtext-Informationen auf dem Bildschirm 44 vorausgesetzt ist, müssen bei der Abtastung in x-Richtung nach 480 abgezählten Bildinformationsadressen noch weitere 135 Zählschritte durchgeführt werden. Bei gleichbleibender Bildwiederholrate gilt entsprechendes in y-Richtung. Hier muß der Zeilenzähler 52 nicht 240, sondern weitere 68 Zählschritte durchführen.

Das Diagramm nach Fig. 6b entspricht auch der tatsächlichen Bildwiedergabe des Bildschirmtext-Objekts, wenn der Abtaststrahl des Bildschirms 44 für die x,y-Adresse 0,0 des Bildschirmtext-Bildes im Bildschirm 44 auch die Position 0,0 hat. Ist dies nicht der Fall, so kann der schraffierte Bereich auch an anderer Stelle erscheinen, d.h. die in Fig. 6b gezeigte weiße Bildfläche hat dann eine andere Lage. Der Bildinformationsspeicher 40 sollte auch für den schraffierten Bereich vorbestimmte Informationen, z.B. eine gleichbleibende Farbwiedergabe, enthalten, da das Lesen von Informationen während der Adressierung des Bildinformationsspeichers 40 grundsätzlich nicht unterbrochen wird.

Vorstehend wurde vorausgesetzt, daß mit der in Fig. 5 gezeigten Schaltungsanordnung entweder eine Informationsdarstellung mit Bildelementen A der in Fig. 1a gezeigten Art oder mit Bildelementen A' der in Fig. 3b gezeigten Art gesteuert werden soll. Dies ist mit der in Fig. 5 gezeigten Schaltungsanordnung problemlos, wenn es sich um die Belegung des gesamten Bildschirms entweder mit der einen oder mit der anderen Art von Informationen handelt. Soll aber eine Bild im Bild-Darstellung mit Bildelementen unterschiedlicher Abmessung in x- und y-Richtung durchgeführt werden, wie sie in Fig. 4 für das Quadrat mit der Seitenlänge Q' in dem größeren Bildausschnitt gezeigt ist, so können bei Anwendung der in Fig. 5 gezeigten Schaltungsanordnung Effekte auftreten, die nur mit erhöhtem schaltungstechnischem Aufwand zu vermeiden sind. Zur Erläuterung wird nun auf Fig. 7 Bezug genommen, die ein Diagramm des zeitlichen Verlaufs der Adressierung des Spaltenzählers 46 (Fig. 5) in x-Richtung zeigt. Der Verlauf 20 zeigt die Zunahme des Zählstandes des Spaltenzählers 46 ausgehend von Null bis zum Endstand X, der zum Zeitpunkt Ts erreicht wird. Der gestrichelt dargestellte Verlauf 21 zeigt entsprechend den Zählstand des Spaltenzählers 46 ausgehend von Null bis zum Endwert X', der gleichfalls zum Zeitpunkt Ts erreicht wird. Die Steigungen der beiden Verläufe 20 und 21 entsprechen der Taktung des Spaltenzählers 46 mit der Frequenz f1 oder f2. Nach dem Zeitpunkt Ts beginnt der Zählvorgang für den Spaltenzähler 46 wieder ausgehend vom Zählstand Null. Wenn ein Teil der Bildschirmfläche Informationen mit Bildelementen darstellen soll, die breiter als die im übrigen Teil der Bildfläche verwendeten Bildelemente sind, so muß der Zählvorgang während der Zeit, die der Breite des unterschiedlichen Bildteils entspricht, verlangsamt werden. Für diese Zeit tx ist in Fig. 7 ein strichpunktierter Verlauf 22 dargestellt, der verdeutlicht, daß der Spaltenzähler 46 während der Zeit tx langsamer getaktet wird und mit Ablauf der Zeit tx einen geringeren Zählstand erreicht als bei normalem Verlauf 20. Ausgehend von diesem geringeren Zählstand wird der Spaltenzähler 46 dann wieder schneller getaktet. Er kann aber entsprechend dem in Fig. 7 fortgesetzten strichpunktierten Verlauf 23 zum Zeitpunkt Ts nur den Endstand Xe erreichen. Bei Fortsetzung des Zählvorgans erreicht der Spaltenzähler 46 den seinem Zählvolumen entsprechenden Endstand X erst zu einem späteren Zeitpunkt Te, zu dem sich der Abtaststrahl des Bildschirms bereits in der nächstfolgenden Zeile befinden kann. Es ergibt sich eine Differenz X-Xe, die für die jeweilige Größe eines innerhalb eines größeren Bildes darzustellenden Bildausschnittes gesondert aus dem Verhältnis tx:Ts bestimmt werden muß, um bei der Adressierung des Bildinformationsspeichers 40 (Fig.5) eine entsprechende Korrektur durchzuführen. Problematischer ist eine Korrektur der Verschiebung in x-Richtung, die ein Bildpunkt P, der gemäß dem Verlauf 20 normalerweise an einer bestimmten Stelle des Bildschirms abgebildet würde, durch den geänderten Verlauf 23 erfährt. Dadurch wird der Bildpunkt P als falscher Bildpunkt P' zu einem späteren Zeitpunkt, also in x-Richtung verschoben, dargestellt. Informationen mit einer Spaltenadresse, die einen Wert größer als Xe hat, können nicht mehr dargestellt werden.

Probleme ähnlich den vorstehend beschriebenen treten auch hinsichtlich der Adressierung des Bildinformationsspeichers 40 in y-Richtung auf.

Umfangreiche Zusatzschaltungen, die entsprechende Korrekturen vornehmen, können vermieden werden, wenn zwei getrennte Bildinformationsspeicher für Bildelemente A einerseits und für Bildelemente A' andererseits verwendert werden. Dabei kann dann der eine Bildinformationsspeicher gemäß dem in Fig. 7 gezeigten Verlauf 20 und der andere Bildinformationsspeicher gemäß dem in Fig. 7 gezeigten Verlauf 21 in x-Richtung und in y-Richtung entsprechend adressiert werden. Damit bei Verwendung zweier Bildinformationsspeicher mit getrennter Spalten- und Zeilenadressierung eine feststehende Bild im Bild-Darstellung erhalten wird, müssen die Adressierungen beider Bildinformationsspeicher dieselbe Bildwiederholfrequenz haben. Dies wird einfach dadurch erreicht, daß die Taktfrequenzen beider Spaltenzähler aus derselben Quelle abgeleitet werden und die Endwerte der Spaltenzähler den an Hand der Fig. 6 beschriebenen Bedingungen genügen. Es ist ferner sinnvoll, den Spaltenzähler und den Zeilenzähler des einen Bildinformationsspeichers mit dem Spalten- bzw. Zeilenzähler des anderen Bildinformationsspeichers zu synchronisieren, um die Nullpunkte aller Zähler zeitlich fest miteinander zu verbinden. Anderenfalls würden die Zähler jeweils zwar in übereinstimmender Zeit immer wider denselben Zählstand erreichen, jedoch wäre der zum jeweiligen Zeitpunkt erreichte absolute Zählstand durch unbestimmte Zustände im Einschaltmoment der Schaltungsanordnung bestimmt.

In Fig. 8 ist der Verlauf der Adressierung zweier Bildinformationsspeicher in x-Richtung dargestellt, der aus den in Fig. 7 bereits gezeigten Einzelverläufen 20 und 21 zusammengesetzt ist, so daß sich während der Zeit tx ein Sprung aus dem Verlauf 20 in den Verlauf 21 ergibt, der dem Abschnitt 24 der Gesamtkurve entspricht. Zu Beginn der Zeit tx wird auf diesen Abschnitt 24 und damit von einem auf den anderen Bildinformationsspeicher umgeschaltet, bei Ablauf der Zeit tx wird auf den ersten Bildinformationsspeicher wieder zurückgeschaltet.

Eine gleichartige Charakteristik ergibt sich für die Adressierung zweier Bildinformationsspeicher in y-Richtung.

Das Umschalten von einem Bildinformationsspeicher auf den anderen erfolgt gemäß der Darstellung in Fig. 8 zu den Zeitpunkten ta und tb. Als Kriterium für die Umschaltung kann der Zählstand eines der beiden Spalten- bzw. Zeilenzähler verwendet werden, da diese Zähler unabhängig von der Umschaltung laufend weiterzählen. Entsprechend gibt es dann z.B. für den Spaltenzähler mit der Zählcharakteristik 20 einen Zählstand Xa bzw. Xb am Anfang und am Ende des Zeitraums tx. In derselben Weise ergeben sich zwei Zählstände für die Zeilenzähler, die einen Zeitraum ty definieren, welcher der Ausdehnung des darzustellenden Bildabschnittes in y-Richtung entspricht.

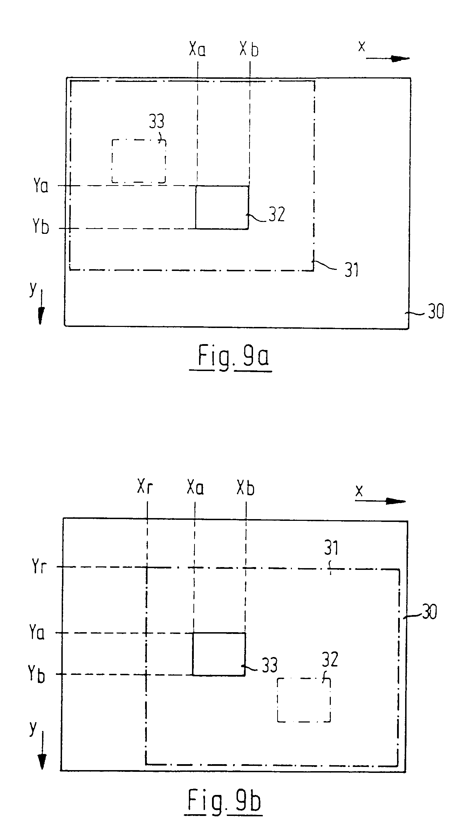

Durch die Umschaltvorgänge in x- und y-Richtung wird bei der Darstellung auf dem Bildschirm eines Datensichtgeräts ein Zeitfenster bzw. eine Fläche geöffnet, auf der innerhalb eines Bildes mit Bildelementen A (Fig. 1a) ein weiteres Bild mit Bildelementen A′ (Fig. 3b) dargestellt werden kann. Eine solche Darstellung ist in Fig. 9a gezeigt. Diese Darstellung entspricht derjenigen nach Fig. 6b, d.h. auf der Bildfläche 30 eines Datensichtgeräts könnte ein vollständiges Bild 31 wiedergegeben werden, das z.B. ein Bildschirmtextbild ist. Ein Teil 32 dieses Bildschirmtextbildes wird nun innerhalb der Grenzen abgebildet, die durch die beschriebenen Zählerstände Xa, Xb, Ya und Yb bestimmt sind.

In Fig. 9a ist strichpunktiert ein anderer Teil 33 des Bildschirmtextbildes angedeutet. Wenn dieses Teilbild 33 an der Stelle der Bildschirmfläche 30 abgebildet werden soll, an der auch das Teilbild 32 abgebildet wird, so läßt sich dies durch eine Verschiebung des gesamten Bildschirmtextbildes 31 erreichen, wie sie in Fig. 9b dargestellt ist. Diese Verschiebung ergibt sich durch Versetzen der Nullpunkte derjenigen Zähler, die den das Bildschirmtextbild enthaltenden Bildinformationsspeicher adressieren. Wenn der entsprechende Spaltenzähler um Xr verzögert rückgesetzt wird, so wird der jeweils erste Bildpunkt einer Zeile entsprechend verzögert aus dem Bildinformationsspeicher gelesen. Zu diesem Zeitpunkt ist aber der Abtaststrahl an einer Position, die der in Fig. 9b gezeigten Adresse Xr entspricht. Eine entsprechende Verschiebung kann in y-Richtung mit dem Betrag Yr vorgesehen werden.

In Fig. 10 ist eine Schaltungsanordnung dargestellt, die die Arbeitsweise gemäß Fig. 8 und 9 ermöglicht und mit zwei Bildinformationsspeichern arbeitet. Eine Datenverarbeitungseinrichtung 60 liefert über einen Adreß-Datenbus 61 Bildinformationen, die mit Bildelementen A′ (Fig. 3b) wiedergegeben werden sollen, in einen ersten Bildinformationsspeicher 62. Der Bildinformationsspeicher 62 wird von einem Spalten-Zeilenzähler 63 in x- und y-Richtung adressiert. Der Takteingang des Spalten-Zeilenzählers 63 wird durch einen Taktgenerator 64 gesteuert, welcher die Taktfrequenz f2 liefert.

Ein weiterer Bildinformationsspeicher 65, der gleichfalls über den Adreß-Datenbus 61 mit Bildinformationen versorgt wird, ist zur Darstellung dieser Bildinformationen mit Bildelementen A (Fig. 1a) vorgesehen. Er wird durch einen Spalten-Zeilenzähler 66 in x- und y-Richtung adressiert, welcher durch Taktsignale der Frequenz f1 getaktet wird, die gleichfalls von dem Taktgenerator 64 abgegeben werden. Wie bei der Schaltungsanordnung nach Fig. 5 haben die Frequenzen f1 und f2 das Verhältnis 4:3. Geeignete Frequenzwerte sind beispielsweise f1 = 50 MHz und f2 = 37,5 MHz.

Der Spalten-Zeilenzähler 66 synchronisiert den Spalten-Zeilenzähler 63 über zwei Ausgänge 67 und 68 in x- und y-Richtung.

Die Ausgangssignale der beiden Bildinformationsspeicher 62 und 65 werden über einen Umschalter 69 einem Farbtabellenspeicher 70 zugeführt, der jeweils eine Umsetztabelle 71 bzw. 72 für die Bildinformationen aus dem Bildinformationsspeicher 62 bzw. 65 enthält. Damit werden die Bildinformationen in digitale Werte für die Einzelfarben rot, grün und blau umgesetzt. Anschließend werden diese Werte einer Digital/Analog-Umsetzungsschaltung 73 zugeführt, die die digitalen Werte für jede Farbe in entsprechende Analogwerte umsetzt. Diese Signale werden dann dem Bildschirm zugeführt. Ferner wird dem Bildschirm ein Horizontal-Vertikal-Synchronisationssignal zugeführt, das von dem Spalten-Zeilenzähler 66 abgegeben wird.

Der Spalten-Zeilenzähler 66 steuert auch den Umschalter 69 und den Farbtabellenspeicher 70. Mit dieser Umschaltung ist der Vorteil verbunden, daß für beide Farbtabellen 71 und 72 eine gemeinsame Speichervorrichtung und eine gemeinsame Digital/Analog-Umsetzerschaltung verwendet werden kann.

Die Einstellung eines Bild im Bild-Fensters nach dem an Hand der Fig. 8 und 9 beschriebenen Prinzip erfolgt in dem Spalten-Zeilenzähler 66 mit über den Adreß-Datenbus 61 zugeführten Werten.

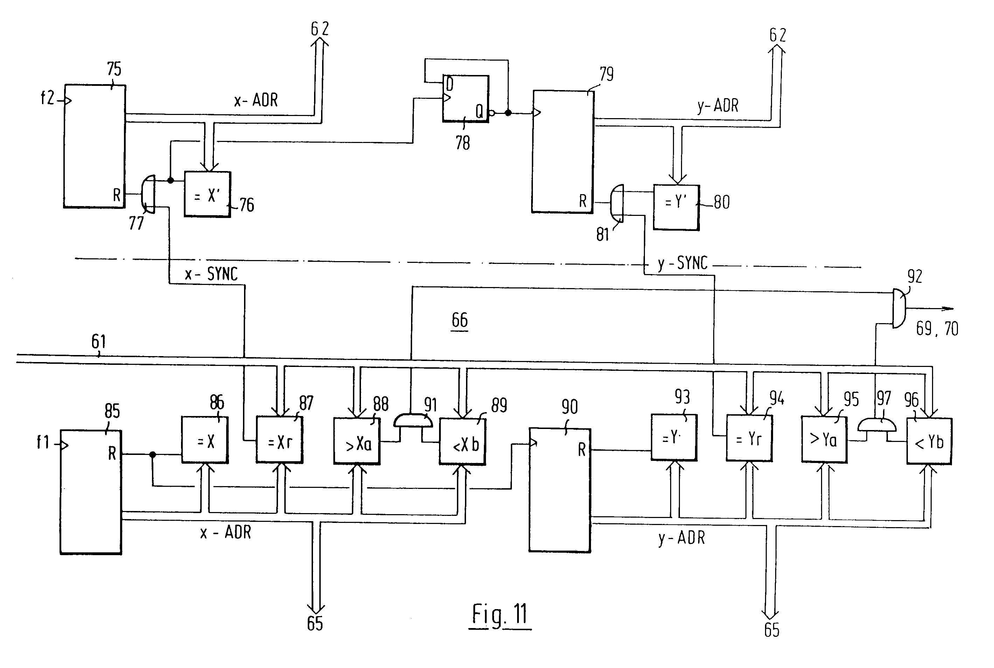

Fig. 11 zeigt ein Ausführungsbeispiel der in Fig. 10 dargestellten Spalten-Zeilenzähler 63 und 66. Im oberen Teil der Figur ist der Spalten-Zeilenzähler 63, im unteren Teil der Spalten-Zeilenzähler 66 dargestellt. Der Spalten-Zeilenzähler 63 enthält einen ersten Spaltenzähler 75, dessen Takteingang mit den Taktsignalen der Frequenz $f2$ gesteuert wird. Die Ausgangssignale des ersten Spaltenzählers 75 werden einem Vergleicher 76 sowie dem Bildinformationsspeicher 62 zugeführt. Bei Übereinstimmung der Ausgangssignale mit einem vorgegebenen Zählstand $X'$ gibt der Vergleicher 76 ein Rücksetzsignal über ein ODER-Glied 77 an den Rücksetzeingang des Spaltenzählers 75. Das ODER-Glied 77 wird ferner mit dem x-Synchronisationssignal aus dem Spalten-Zeilenzähler 66 angesteuert.

Der Ausgang des Vergleichers 76 ist mit einem D-Flipflop 78 verbunden, das als Faktor 2-Teiler geschaltet ist. Sein invertierender Ausgang $\overline{Q}$ ist mit dem Takteingang eines ersten Zeilenzählers 79 verbunden. Dieser ist wie der Spaltenzähler 75 mit einem Vergleicher 80 verbunden, der bei Erreichen eines vorgegebenen Zählstandes $Y'$ ein Ausgangssignal über ein ODER-Glied 81 an den Rücksetzeingang des Zeilenzählers 79 abgibt. Die Ausgangssignale des Zeilenzählers 79 werden ferner an den Bildinformationsspeicher 62 abgegeben. Das ODER-Glied 81 wird an seinem zweiten Eingang durch das y-Synchronisationssignal aus dem Spalten-Zeilenzähler 66 angesteuert.

Der Spalten-Zeilenzähler 66 enthält einen zweiten Spaltenzähler 85, dessen Takteingang die Taktsignale mit der Frequenz $f1$ zugeführt werden. Der Ausgang des Spaltenzählers 85 ist mit dem Bildinformationsspeicher 65 und mit den ersten Eingängen von Vergleichern 86, 87, 88, 89 verbunden. Die Vergleicher 87, 88, 89 sind an ihren zweiten Eingängen mit dem Adreß-Datenbus 61 verbunden und erhalten über diesen die Werte Xr, Xa und Xb (Fig. 8, 9). Der Vergleichswert X des Vergleichers 86 ist fest eingestellt. Der Ausgang dieses Vergleichers 86 ist mit dem Rücksetzeingang des Spaltenzählers 85 und mit dem Takteingang eines zweiten Zeilenzählers 90 verbunden. Der Ausgang des Vergleichers 87 liefert das x-Synchronisationssignal. Die Ausgänge der Vergleicher 88 und 89 sind mit den beiden Eingängen eines UND-Gliedes 91 verbunden, dessen Ausgang den einen Eingang eines weiteren UND-Gliedes 92 ansteuert.

Der Ausgang des Zeilenzählers 90 ist mit den Eingängen von Vergleichern 93, 94, 95, 96 verbunden. Diese Vergleicher sind ähnlich geschaltet wie die Vergleicher 86, 87, 88, 89 und dienen zur Ableitung der entsprechenden y-Signale und des zweiten Eingangssignals für das UND-Glied 92 über ein UND-Glied 97. Die Vergleicher 94, 95, 96 erhalten ihre zweiten Eingangssignale gleichfalls über den Adreß-Datenbus 61. Der Ausgang der Zeilenzählers 90 liefert seine Signale für die y-Richtung an den Bildinformationsspeicher 65. Das UND-Glied 92 liefert das Steuersignal für den Umschalter 69 und den Farbtabellenspeicher 70.

Die Arbeitsweise des Spalten-Zeilenzählers 63 ist aufgrund der Funktionsbeschreibung der in Fig. 5 gezeigten Schaltungsanordnung verständlich. Gleiches gilt für die Arbeitsweise des Spalten-Zeilenzählers 66, soweit der Spaltenzähler 85 mit dem Vergleicher 86 und der Zeilenzähler 90 mit dem Vergleicher 93 betroffen sind. Die Wechselwirkung der beiden Spalten-Zeilenzähler 63 und 66 entspricht der an Hand der Fig. 8 und 9 beschriebenen Arbeitsweise. Wenn der Spaltenzähler 85 den Zählstand X erreicht, so wird er rückgesetzt. Bei Erreichen des Zählstandes Xr wird das x-Synchronisationssignal an den Spalten-Zeilenzähler 63 abgegeben und dessen Spaltenzähler 75 rückgesetzt. Liegt der Zählstand zwischen den Werten Xa und Xb, so liefern die Vergleicher 88 und 89 ein logisches 1-Signal, und das UND-Glied 91 wird durchgeschaltet. Sein Ausgangssignal bestimmt dann die Umschaltzeit des Umschalters 69 in x-Richtung. Eine gleichartige Arbeitsweise ergibt sich für die y-Richtung mit dem Zeilenzähler 90 und den Vergleichern 93, 94, 95, 96. Aufgrund dieser Funktion wird der Umschalter 69 nur dann betätigt, wenn die x-Adresse und die y-Adresse innerhalb der durch die Werte Xa, Xb und Ya, Yb vorgegebenen Bereiche liegen.

**Patentansprüche**

1.   Schaltungsanordnung mit einem Bildinformationsspeicher (40) zum Steuern der bildlichen rasterartigen Darstellung von Informationen auf einem Datensichtgerät mittels Bildelementen, deren Darstellungsfläche in x-Richtung und in y-Richtung durch zeilenweises Auslesen von Bildelementinformationen mit vorbestimmter Auslesegeschwindigkeit aus dem Bildinformationsspeicher (40), der in x-Richtung und y-Richtung bildelementweise adressierbar ist, ein vorbestimmtes Seitenverhältnis hat, wobei zum Darstellen von Informationen mit Bildelementen (B), deren Seitenverhältnis von dem vorbestimmten Seitenverhältnis abweicht, die Auslesegeschwindigkeit der entsprechenden Bildelementinformationen aus dem Bildinformationsspeicher (40) so geändert wird, daß die auf dem Datensichtgerät (44) erzeugten Bildelemente (A') den Bildelementen (B) mit abweichendem Seitenverhältnis geometrisch ähnlich sind, dadurch **gekennzeichnet**, daß die Schaltungsanordnung einen Spaltenzähler (46), einen Zeilenzähler (52) und einen Frequenzteiler (50) aufweist, die so ausgestaltet und angeordnet sind, daß die Adressierung des Bildinformationsspeichers (40) in x-Richtung durch den Spaltenzähler (46) und in y-Richtung durch den von diesem mit jedem Rücksetzen getakteten Zeilenzähler (52) erfolgt, wobei jeder dieser Zähler (46, 52) zwischen je einem ersten (X, Y) und einem zweiten Endwert (X', Y'), der ihrem Rücksetzen entspricht, umschaltbar sind, wenn die Auslesegeschwindigkeit in x-Richtung durch Umschalten der Zählerfrequenz (f1, f2) des Spaltenzählers (46) geändert wird, und daß mit diesem Umschalten ein die Auslesegeschwindigkeit in y-Richtung verringernder Frequenzteiler (50) in die Taktsteuerverbindung zwischen dem Spaltenzähler (46) und dem Zeilenzähler (52) einschaltbar ist.

2. Schaltungsanordnung nach Anspruch 1, dadurch **gekennzeichnet,** daß die Auslesegeschwindigkeit in x-Richtung verringert und jede Zeile von Bildelementinformationen aus dem Bildinformationsspeicher (40) mehrfach nacheinander ausgelesen wird.

3. Schaltungsanordnung nach Anspruch 2, dadurch **gekennzeichnet,** daß die Auslesegeschwindigkeit um den Faktor

$$v = k \cdot \frac{Bx}{By} \cdot \frac{Ay}{Ax}$$

verringert wird, wobei Bx/By das abweichende Seitenverhältnis, Ax/Ay das vorbestimmte Seitenverhältnis und k eine ganze Zahl größer als 1 ist.

4. Schaltungsanordnung nach einem der vorhergehenden Ansprüche, dadurch **gekennzeichnet,** daß die Darstellung mit beiden Bildelementarten (A, A') bei übereinstimmender Vertikal- und Horizontalsynchronisationsfrequenz erfolgt.

5. Schaltungsanordnung nach einem der vorhergehenden Ansprüche, dadurch **gekennzeichnet,** daß zur Bild im Bild-Darstellung mit unterschiedlichen Bildelementarten (A, A') zwei Bildinformationsspeicher (62, 65) vorgesehen sind und daß die Adressierschaltung (66) des einen Bildinformationsspeichers (65) die Adressierschaltung (63) des anderen Bildinformationsspeichers (62) synchronisiert.

6. Schaltungsanordnung nach Anspruch 5, dadurch **gekennzeichnet,** daß beide Adressierschaltungen (63, 66) mit Taktsignalen (f1, f2) ein und desselben Taktgenerators (64) gesteuert werden.

7. Schaltungsanordnung nach Anspruch 5 oder 6, dadurch **gekennzeichnet,** daß die Umschaltung zwischen den beiden Bildinformationsspeichern (62, 65) durch eine (66) der Adressierschaltungen (63, 66) gesteuert wird.

8. Schaltungsanordnung nach einem der Ansprüche 5 bis 7, dadurch **gekennzeichnet,** daß der Nullpunkt der Adressierschaltung (66) für den Bildinformationsspeicher der mit abweichenden Bildelementen (A') darzustellenden Informationen um einen vorbestimmten Betrag (Xr, Yr) in x- und in y-Richtung verschiebbar ist.

**Claims**

1. Circuit device having a picture information memory (40) for control of the raster scan pictorial display of information on a visual display unit by means of pixels, the display surface of which in the x direction and in the y direction has a predetermined aspect ratio on account of linewise readout of pixel information with a predetermined readout rate from the picture information memory (40), which is addressable in the x direction and in the y direction by pixels, in which device, for the display of information by pixels (B), the aspect ratio of which differs from the predetermined aspect ratio, the readout rate of the corresponding pixel information from the picture information memory (40) is altered so that the pixels (A') generated on the visual display unit (44) are geometrically similar to the pixels (B) with a different aspect ratio, characterized in that the circuit device exhibits a column counter (46), a line counter (52) and a frequency divider (50), which are designed and arranged so that the addressing of the picture information memory (40) takes place in the x direction by the column counter (46) and in the y direction by the line counter (52) which is clocked by the column counter upon each reset, in which device each one of these counters (46, 52) is switchable between a respective first (X, Y) and a second end value (X', Y'), which corresponds to their reset, when the readout rate in the x direction is altered by switching over the counter frequency (f1, f2) of the column counter (46), and in that, upon such switching over, a frequency divider (50) reducing the readout rate in the y direction can be switched into the clock control connection between the column counter (46) and the line counter (52).

2. Circuit device according to Claim 1, characterized in that the readout rate in the x direction is reduced and each line of pixel information is read out on a multiple basis in succession from the picture information memory (40).

3. Circuit device according to Claim 2, characterized in that the readout rate is reduced by the factor

$$v = k \cdot \frac{Bx}{By} \cdot \frac{Ay}{Ax}$$

where Bx/By is the different aspect ratio, Ax/Ay is the predetermined aspect ratio and k is an integer greater than 1.

4. Circuit device according to one of the preceding claims, characterized in that the display takes place with both types of pixel (A, A') with concordant vertical and horizontal synchronization frequency.

5. Circuit device according to one of the preceding claims, characterized in that for picture-in-picture display with differing types of pixel (A, A') two picture information memories (62, 65) are provided, and in that the addressing circuit (66) of one of the picture information memories (65) synchronizes the addressing circuit (63) of the other picture information memory (62).

6. Circuit device according to Claim 5, characterized in that both addressing circuits (63, 66) are controlled by clock signals (f1, f2) of one and the same clock generator (64).

7. Circuit device according to Claim 5 or 6, characterized in that the switching over between the two picture information memories (62, 65) is controlled by one (66) of the addressing circuits (63, 66).

8. Circuit device according to one of Claims 5 to 7, characterized in that the zero point of the addressing circuit (66) for the picture information memory of the information to be displayed using different pixels (A') can be displaced by a predetermined amount (Xr, Yr) in the x direction and in the y direction.

**Revendications**

1. Montage comportant une mémoire d'informations d'images (40) pour commander la représentation sous la forme d'une image en forme de trame d'informations sur un appareil de visualisation de données au moyen d'éléments d'image, dont les côtés de la surface de représentation dans la direction x et dans la direction y sont dans un rapport prédéterminé, sous l'effet d'une lecture ligne par ligne d'informations d'éléments d'image avec une vitesse de lecture prédéterminée à partir de la mémoire d'informations d'images (40), qui est adressable élément d'image par élément d'image dans la direction x et dans la direction y, et dans lequel pour la représentation d'informations comportant des éléments d'image (B), dont le rapport des côtés diffère du rapport latéral prédéterminé, la vitesse de lecture des informations correspondantes d'éléments d'image à partir de la mémoire d'informations d'image (40) est modifiée de telle sorte que les éléments d'image (A'), produits dans l'appareil de visualisation de données (44), sont géométriquement semblables aux éléments d'image (B) dont le rapport des côtés est différent, caractérisé par le fait que le montage comporte un compteur de colonnes (46), un compteur de lignes (52) et un diviseur de fréquence (50), qui sont agencés et disposés de telle sorte que l'adressage de la mémoire d'informations d'image (40) s'effectue dans la direction x au moyen du compteur de colonnes (46) et dans la direction y au moyen du compteur de lignes (52) commandé de façon cadencée par le compteur de colonnes, lors de chaque remise à zéro, chacun de ces compteurs (46, 52) pouvant être commuté entre respectivement une première valeur finale (X, Y) et une seconde valeur finale (X', Y'), qui correspond à sa remise à zéro, lorsque la vitesse de lecture dans la direction x est modifiée par commutation de la fréquence (f1, f2) du compteur de colonnes (46), et que sous l'effet de cette commutation, un diviseur de fréquence (50), qui réduit la vitesse de lecture dans la direction y, peut être inséré dans la liaison de commande cadencée entre le compteur de colonnes (46) et le compteur de lignes (52).

2. Montage suivant la revendication 1, caractérisé par le fait que la vitesse de lecture dans la direction x est réduite et que chaque ligne d'informations d'éléments d'images est lue successivement à plusieurs reprises à partir de la mémoire d'informations d'images (40).

3. Montage suivant la revendication 2, caractérisé par le fait que la vitesse de lecture est réduite du facteur

$$v = k \cdot \frac{Bx}{By} \cdot \frac{Ay}{Ax}$$

Bx/By représentant le rapport différent des côtés, Ax/Ay le rapport prédéterminé des côtés et k un nombre entier supérieur à 1.

4. Montage suivant l'une des revendications précédentes, caractérisé par le fait que la représentation avec deux types d'éléments d'images (A, A') s'effectue avec une fréquence de synchronisation verticale et une fréquence de synchronisation horizontale, qui coïncident.

5. Montage suivant l'une des revendications précédentes, caractérisé par le fait que deux mémoires d'informations d'images (62, 65) sont prévues pour l'image dans la représentation de l'image avec des types différents (A, A') d'éléments d'image, et que le circuit d'adressage (66) d'une mémoire d'informations d'images (65) synchronise le circuit d'adressage (63) de l'autre mémoire d'informations d'images (62).

6. Montage suivant la revendication 5, caractérisé par le fait que les deux circuits d'adressage (63, 66) sont commandés avec des signaux de cadence (f1, f2) du même générateur de cadence (64).

7. Montage suivant la revendication 5 ou 6, caractérisé par le fait que la commutation entre les deux mémoires d'informations d'images (62, 65) est commandée par l'un (66) des circuits d'adressage (63, 66).

8. Montage suivant l'une des revendications 5 à 7, caractérisé par le fait que le point zéro du circuit d'adressage (66) pour la mémoire d'informations d'images des informations devant être représentées avec des éléments d'images différents (A'), peut être décalé d'une valeur prédéterminée (Xr, Yr) dans la direction x et dans la direction y.

Fig. 1a

Fig. 1b

Fig. 2

Fig.3a    Fig.3b

Fig.4

Fig.5

$\overrightarrow{x, t1}$

0                                               X = 819

y, X × t1 ↓

Y = 614

Fig. 6a

$\overrightarrow{x, t2}$

0                                  479    X' = 614

y, X × t2 ↓

239

Y' = 307

Fig. 6b

Fig.7

Fig.8

16

Fig. 9a

Fig. 9b

Fig. 10

EP 0 337 104 B1

Fig. 11